# EUROPEAN PATENT APPLICATION

(11) **EP 4 510 317 A1**
(43) Date of publication of application: **19.02.2025**
(21) Application number: 23890381.9
(22) Date of filing: 12.09.2023
(51) Int. Cl.: H01M 50/103, H01M 50/124, H01M 50/176, H01M 50/167, H01M 50/183, H01M 50/531

(54) **BATTERY AND ELECTRONIC DEVICE**

(30) Priority: 15.11.2022 CN 202223053645 U
(71) Applicant: Zhuhai CosMX Battery Co., Ltd., Zhuhai, Guangdong 519180 (CN)
(72) Inventor: LIN, Yongtao, Zhuhai, Guangdong 519180 (CN); SHENG, Donghui, Zhuhai, Guangdong 519180 (CN); XIONG, Jiageng, Zhuhai, Guangdong 519180 (CN); XIE, Jichun, Zhuhai, Guangdong 519180 (CN)
(74) Representative: Vossius & Partner Patentanwälte Rechtsanwälte mbB
(86) International application number: PCT/CN2023/118374
(87) International publication number: WO 2024/103944

(57) **Abstract**

A battery and an electronic device where the battery includes a battery cell assembly, a first shell and a terminal post disposed in the first shell; the first shell has a holding cavity, and the battery cell assembly is disposed in the holding cavity; the battery cell assembly includes a battery cell and a second shell encased outside the battery cell, the battery cell has a tab, the second shell includes a body and a sealing edge extending outwardly from an edge of one side of the body; the second shell has an opening on a side facing the tab, the sealing edge bends towards the body; the tab extends out of the second shell from the opening along a bending direction of the sealing edge, and the terminal post is electrically connected to the tab. The battery and the electronic device can prevent the battery from leakage.

## Description

### CROSS-REFERENCE TO RELATED APPLICATION

The present invention claims priority to Chinese Patent Application No. 202223053645.0, filed with China National Intellectual Property Administration on November 15, 2022 and entitled "Battery and Electronic Device". The above application is hereby incorporated by reference in its entirety.

### TECHNICAL FIELD

The present invention relates to the field of new energy and, in particular, to a battery and an electronic device.

### BACKGROUND

Battery is a device that converts chemical energy into electrical energy, and its application in life is extremely wide. With the development of the battery industry, the requirements for the performance of the battery are getting higher and higher.

Existing batteries generally include a battery cell and a shell, where the battery cell is provided in the shell, and the shell is used to protect the battery cell, and the shell is generally formed by a material having good mechanical properties, such as stainless steel, aluminum alloy, and the like.

However, the inventor found that due to poor toughness of the shell, the shell is easy to be damaged by an external force at stress concentration of the edge, resulting in leakage.

### SUMMARY

The present invention provides a battery and an electronic device for preventing the battery from leakage in order to solve at least one of the problems mentioned in the background.

In order to achieve the above object, the present invention provides the following technical solutions.

In a first aspect, the present invention provides a battery including a battery cell assembly, a first shell, and a terminal post disposed in the first shell; the first shell has a holding cavity, and the battery cell assembly is disposed in the holding cavity; the battery cell assembly includes a battery cell and a second shell encapsulated outside the battery cell; the battery cell has a tab, and the second shell includes a body and a sealing edge extending outwardly from an edge of one side of the body; an opening is provided on one side of the second shell facing the tab, and the sealing edge bends towards the body; the tab extends out of the second shell along the bending direction of the sealing edge, and the terminal post is electrically connected to the tab.

As an optional embodiment, a projection of the sealing edge in a length direction of the battery overlaps at least partially with a projection of the terminal post in the length direction of the battery.

As an optional embodiment, the sealing edge and the terminal post are disposed side-by-side along the length direction of the battery.

As an optional embodiment, the tab has a connecting portion extends out of outer side of the sealing edge, the connecting portion is electrically connected to a first end of the terminal post, and a second end of the terminal post extends beyond the first shell.

As an optional embodiment, the opening faces a side of the battery cell and the connecting portion bends and extends on the outer side of the sealing edge.

As an optional embodiment, the connecting portion is bent and provided on a side of the first end of the terminal post away from the second end of the terminal post, and an end surface of the first end of the terminal post abuts against a surface of the connecting portion.

As an optional embodiment, the connecting portion is bent towards the terminal post and the connecting portion extends to a side of the first end of the terminal post, and an end surface of the first end of the terminal post abuts against a surface of the sealing edge.

As an optional embodiment, a surface of the connecting portion abuts against a sidewall of the second end.

As an optional embodiment, a cross-section of the second end is larger than a cross-section of the first end, a connection surface is formed at a connection between the second end and the first end, an end of the connecting portion is bent towards the first end of the terminal post along the connection surface, and an end surface of the connecting portion abuts against the connection surface.

As an optional embodiment, a heat dissipation layer is provided with between adjacent wall surfaces of the second shell and the first shell.

As an optional embodiment, a protective element is also included, and the protective element is connected between the tab and the terminal post.

As an optional embodiment, an insulating member is provided between the terminal post and the first shell.

As an optional embodiment, the battery cell is a rolled-core or laminated structure.

As an optional embodiment, the terminal post is formed by copper or aluminum.

As an optional embodiment, the first shell is a metal shell and the second shell is an aluminum-plastic film.

As an optional embodiment, the aluminum-plastic film is formed by bonding nylon, aluminum foil, and polypropylene.

As an optional embodiment, the insulating member is formed by resin or plastic.

As an optional embodiment, the electrode sheet is also included, the electrode sheet is provided on a side of the first end of the terminal post away from the first shell.

As an optional embodiment, the electrode sheet is welded to the first end of the terminal post.

In a second aspect, the present invention further provides an electronic device, the electronic device including any of the batteries of the first aspect.

The battery provided by the present invention includes a battery cell assembly, a first shell, and a terminal post disposed in the first shell; the first shell has a holding cavity, and the battery cell assembly is disposed in the holding cavity; the battery cell assembly includes a battery cell and a second shell encapsulated outside the battery cell; the battery cell has a tab, and the second shell includes a body and a sealing edge extending outwardly from an edge of one side of the body; an opening is provided on one side of the second shell towards the tab, and the sealing edge bends towards the body; the tab extends out of the second shell from the opening along a bending direction of the sealing edge, and the terminal post is electrically connected to the tab. The battery provided by the present invention involves covering a layer of a second shell outside the battery cell, and providing the second shell and the battery cell within a first shell, where liquid leakage can be effectively prevented at the stress concentration of the edge of the battery cell by the second shell, and the battery cell can be prevented from being directly subjected to an external force by the first shell, and an opening can be left on one side of the second shell, and a tab can be protruded out from the opening and a sealing edge is provided on the edge of the opening, and at the same time, the sealing edge and the tab are bent together to improve the sealing at the opening.

### BRIEF DESCRIPTION OF DRAWINGS

To describe the technical solutions in embodiments of the present invention or in the prior art more clearly, the following briefly introduces the accompanying drawings needed for describing the embodiments or the prior art. Apparently, the accompanying drawings in the following description illustrate merely some embodiments of the present invention, and for persons of ordinary skill in the art, other drawings may still be obtained from these accompanying drawings without creative effort.
FIG. 1 is a schematic diagram of an overall structure of a battery provided by an embodiment of the present invention.
FIG. 2 is an exploded view of FIG. 1.
FIG. 3 is a schematic diagram of a second shell of a battery provided by an embodiment of the present invention before bending of a sealing edge.
FIG. 4 is a schematic diagram of a second shell of a battery provided by an embodiment of the present invention after bending of a sealing edge.
FIG. 5 is a cross-sectional view of a first type of battery provided by an embodiment of the present invention.
FIG. 6 is a cross-sectional view of a second type of battery provided by an embodiment of the present invention.
FIG. 7 is a cross-sectional view of a third type of battery provided by embodiments of the present invention.

Description of reference signs:
100-Battery;
110-Battery cell assembly;
111-Battery cell;
1111-Tab;
1111a-Connecting portion;
112-Second shell;
1121-Opening;
1122-Sealing edge;
1123-Body;
120-First shell;
130-Terminal post;
131-First end;
132-Second end;
140-Heat dissipation layer;
150-Protection element;
160-Electrode sheet;
170-Insulating member.

### DESCRIPTION OF EMBODIMENTS

The technical solutions in the embodiments of the present invention will be described clearly and completely in the following in conjunction with the accompanying drawings in the embodiments of the present invention, and it is obvious that the described embodiments are only some of the embodiments of the present invention and not all of the embodiments. Based on the embodiments in the present invention, all other embodiments obtained by a person of ordinary skill in the art without creative labor fall within the scope of protection of the present invention.

In the application, the terms "upper", "lower", "left", "right", "front", "back", "top", "bottom", "inner", "outside", "vertical", "horizontal", "lateral", "longitudinal", etc. indicate an orientation or positional relationship based on the accompanying drawings. These terms are primarily intended to better describe the present invention and its embodiments and are not intended to specify that the indicated devices, elements or components must have a particular orientation or be constructed and operated in a particular orientation.

Moreover, some of the above terms may be used to indicate other meanings in addition to an orientation or positional relationship, for example, the term "upper" may also be used to indicate a certain dependency or connection relationship in some cases. To a person of ordinary skill in the art, the specific meaning of these terms in the present invention may be understood according to the specific circumstances.

In addition, the terms "install", "set up", "provide", "connect to", "connect with" should be understood in a broad sense. For example, it may be a fixed connection, a removable connection, or a monolithic construction; it may be a mechanical connection or an electrical connection; it may be a direct connection or an indirect connection through an intermediate medium; or it may be an internal communication between two devices, elements, or components. For a person of ordinary skill in the art, the specific meanings of the above terms in the present invention may be understood on a case-by-case basis.

Furthermore, the terms "first", "second", etc. are used primarily to distinguish different devices, elements or components (which may be of the same or different specific types and configurations) and are not intended to indicate or imply the relative importance and number of the indicated devices, elements or components. Unless otherwise indicated, "a plurality of" means two or more.

Existing batteries generally include a battery cell and a first shell, where the battery cell is provided in the first shell, and the first shell is used to protect the battery cell, and the first shell is generally formed by a material having good mechanical properties, such as stainless steel, aluminum alloy, and the like. However, the inventor found that due to the poor toughness of the first shell, the first shell is easy to be damaged at the stress concentration of the edge by an external force, resulting in leakage.

In view of this, the present invention provides a battery, including a battery cell assembly, a first shell, and a terminal post disposed in the first shell; the first shell has a holding cavity, and the battery cell assembly is disposed in the holding cavity; the battery cell assembly includes a battery cell and a second shell encapsulated outside the battery cell; the battery cell having a tab, and the second shell includes a body and a sealing edge extending outwardly from an edge of one side of the body; an opening is provided on one side of the second shell towards the tab, and the sealing edge bends towards the body; the tab extends out of the second shell from the opening along the bending direction of the sealing edge, and the terminal post is electrically connected to the tab. The battery provided by the present invention is provided by covering a layer of a second shell outside the battery cell, and providing the second shell and the battery cell within a first shell, where liquid leakage can be effectively prevented at the stress concentration of an edge of the battery cell by the second shell, and the battery cell can be prevented from being directly subjected to an external force by the first shell, and an opening can be provided on one side of the second shell, and the tab can be protruded out from the opening and a sealing edge is provided on the edge of the opening, and at the same time, the sealing edge and the tab are bent together to improve the sealing at the opening.

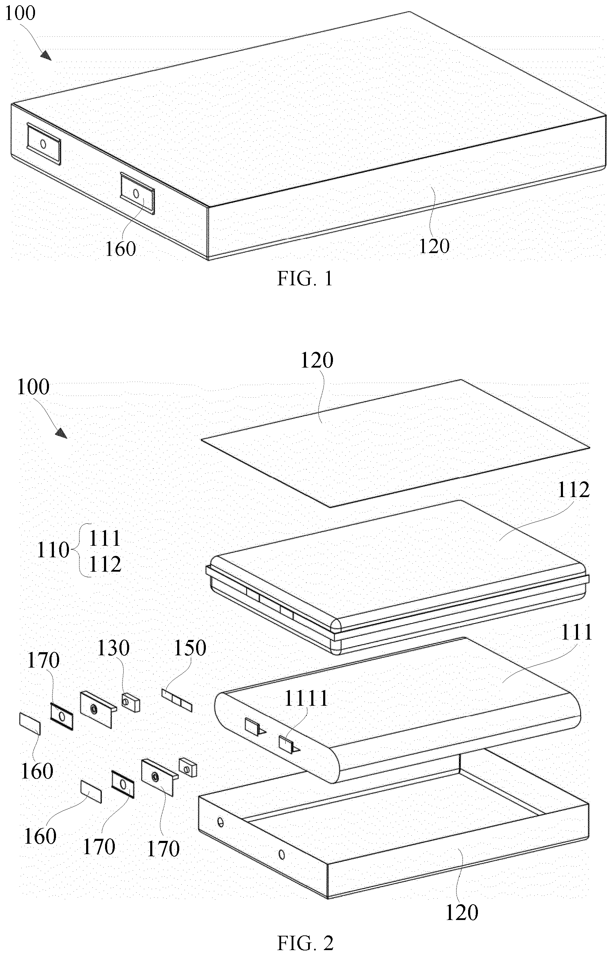

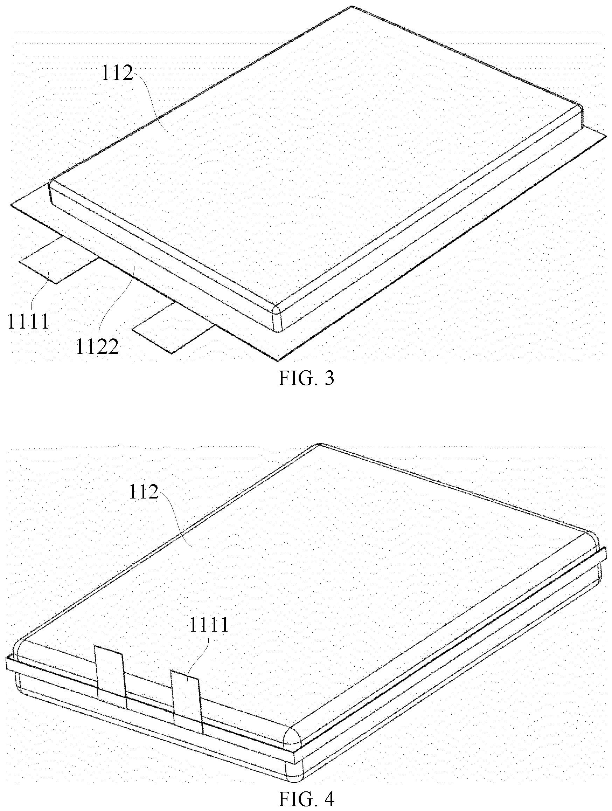

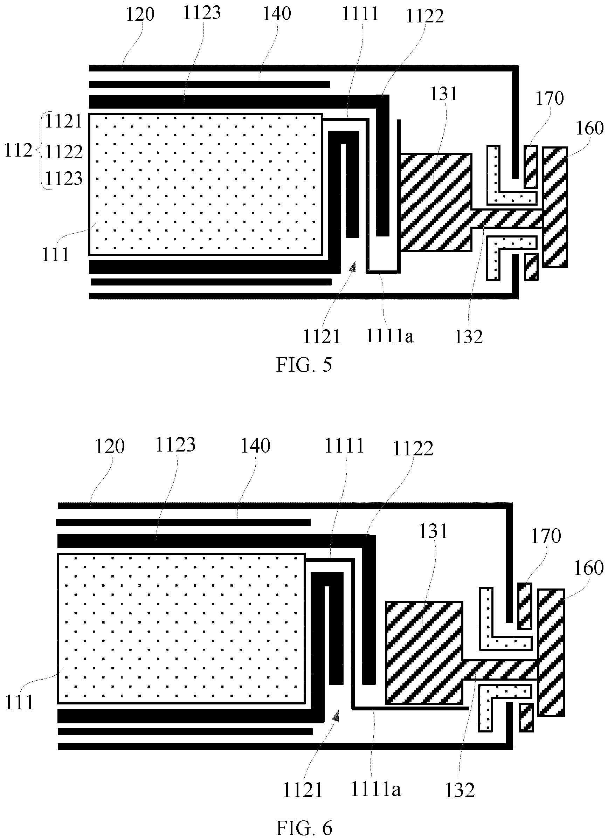

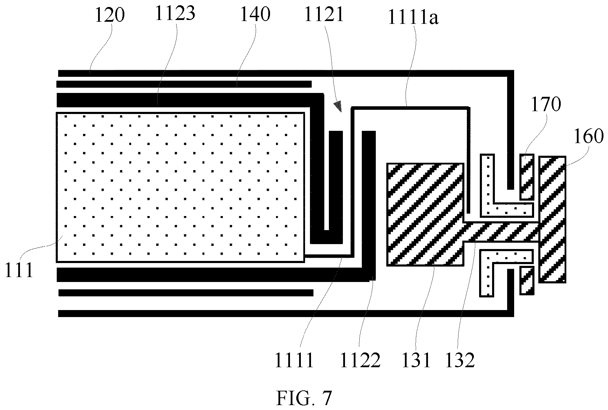

FIG. 1 is a schematic diagram of an overall structure of a battery provided by an embodiment of the present invention; FIG. 2 is an exploded view of FIG. 1; FIG. 3 is a schematic diagram of a second shell of a battery provided by an embodiment of the present invention before bending of a sealing edge; FIG. 4 is a schematic diagram of a second shell of a battery provided by an embodiment of the present invention after bending of a sealing edge; FIG. 5 is a cross-sectional view of a first kind of battery provided by an embodiment of the present invention; FIG. 6 is a cross-sectional view of a second kind of battery provided by an embodiment of the present invention; Figure 7 is a cross-sectional view of a third type of battery provided by an embodiment of the present invention. Reference can be made to FIGS. 1 to 7, embodiments of the present invention provide a battery 100, the battery 100 includes a battery cell assembly 110, a first shell 120, and a terminal post 130 disposed the first shell 120; the first shell 120 has a holding cavity, and the battery cell assembly 110 is disposed in the holding cavity; the battery cell assembly 110 includes a battery cell 111 and a second shell 112 encapsulated outside the battery cell 111, the battery cell 111 has a tab 1111, the second shell 112 includes a body 1123 and a sealing edge 1122 extending outwardly from an edge of one side of the body 1123, an opening 1121 is provided on one side of the second shell 112 towards the tab 1111, the sealing edge 1122 bends towards the body 1123; the tab 1111 extends out of the second shell 112 from the opening 1121 along the bending direction of the sealing edge 1122, and the terminal post 130 is electrically connected to the tab 1111.

Where the battery cell 111 includes a negative electrode formed by a negative electrode material, a positive electrode formed by a positive electrode material, and a separator separating the positive and negative electrodes, and the battery cell 111 is of a rolled-core type, a laminated type, and the like, and this embodiment has no specific limitation on this.

Where the first shell 120 serves to protect the battery cell 111 therein, and the first shell 120 may be spliced from two parts to facilitate installation. The material of the first shell 120 may be selected from stainless steel, which is strong and corrosion-resistant, of course, the first shell 120 may also be selected from other materials, and this embodiment has no specific limitation on this.

Where the second shell 112 may be formed by an aluminum-plastic film, and specifically, the aluminum-plastic film may include a nylon layer, an aluminum foil layer, a heat-sealable layer, and an adhesive for bonding. The innermost layer is a heat-sealable layer, and may use a polypropylene material to act as sealing and bonding, and the polypropylene material has good heat-sealing adhesion with the metal Ni, Al, and an adhesive block for the tab 1111, and has electrolyte resistance, insulating property, and penetration resistance. The middle layer can use aluminum foil, and specifically can use pure aluminum or aluminum-iron alloy, and can react with oxygen in the air at room temperature to generate an oxide film, preventing oxygen, moisture intrusion and playing the effect of protecting the internal battery cell 111. The outermost layer can use nylon, which is characterized by good impact resistance, good puncture resistance, heat resistance, insulation property, good friction resistance, and the like, and it is used to protect the aluminum foil layer from scratch and to mitigate the shock and vibration of the battery 100 due to dropping so as to protect the interior.

The terminal post 130 is generally formed by a material with good electrical conductivity, such as copper, aluminum, and the like. The main function of the terminal post 130 is to conduct the electrical energy on the tab 1111 of the battery cell 111 to the outside of the first shell 120 for ease of use.

The battery 100 provided by the present invention is provided by covering a layer of a second shell 112 outside the battery cell 111, and providing the second shell 112 and the battery cell 111 in a first shell 120, where liquid leakage can be effectively prevented at the stress concentration of the edge of the battery cell 111 by the second shell 112, and the battery cell 111 can be prevented from being directly subjected to an external force by the first shell 120, and an opening 1121 can be provided on one side of the second shell 112, the tab 1111 can be protruded out from the opening 1121, and a sealing edge 1122 is provided on the edge of the opening 1121, and at the same time, the sealing edge 1122 and the tab 1111 are bent together to improve the sealing at the opening 1121.

In the above embodiment, the projection of the sealing edge 1122 in the length direction of the battery 100 overlaps at least partially with the projection of the terminal post 130 in the length direction of the battery 100. In specific embodiments, the sealing edge 1122 and the terminal post 130 may be disposed side-by-side along the length direction of the battery 100.

In the above embodiment, the tab 1111 may have a connection portion 1111a extending out of an outer side of the sealing edge 1122, the connecting portion 1111a is electrically connected to a first end 131 of the terminal post 130, and a second end 132 of the terminal post 130 extends beyond the first shell 120. The connecting portion 1111a of the tab 1111 exposed from the sealing edge 1122 is used to connect to the electrically conductive terminal post 130 so as to conduct the electrical energy of the tab 1111 out of the first shell 120 of the battery 100 through the terminal post 130.

In the above embodiment, the opening 1121 may face a side of the battery cell 111, and the connecting portion 1111a bends and extends on the outside of the sealing edge 1122.

In the above embodiment, the connecting portion 1111a may be connected to the terminal post 130 in a variety of forms. For example, as shown in FIG. 5, the connecting portion 1111a may be bent and provided on a side of the first end 131 of the terminal post 130 away from the second end 132 of the terminal post 130, and an end surface of the first end 131 of the terminal post 130 abuts against a surface of the connecting portion 1111a.

For another example, the connecting portion 1111a may be bent toward the terminal post 130 and the connecting portion 1111a extends to a side of the first end 131 of the terminal post 130, with an end surface of the first end 131 of the terminal post 130 abutting against the sealing surface 1122. As shown in FIG. 6, a surface of the connecting portion 1111a may be abutted against a sidewall of the second end 132.

As further shown in FIG. 7, a cross-section of the second end 132 may be larger than a cross-section of the first end 131, a connection surface is formed at the connection between the second end 132 and the first end 131, an end of the connecting portion 1111a is bent toward the first end 131 of the terminal post 130 along the connection surface, and an end surface of the connecting portion 1111a abuts against the connection surface.

In the above embodiment, there may be provided with a heat dissipation layer 140 between adjacent wall surfaces of the second shell 112 and the first shell 120. Where the heat dissipation layer 140 may use a heat dissipation adhesive, and the heat dissipation adhesive may be coated on an outer wall of the second shell 112 to help the battery cell 111 to dissipate heat better.

In the above embodiment, a protection element 150 may also be included, and the protection element 150 is connected between the tab 1111 and the terminal post 130. Where the protection element 150 mainly serves to protect the battery 100 from over-charging, over-discharging, over-current, and short-circuit, etc. Specifically, for example, when charging the battery 100, once the voltage reaches the maximum voltage of the battery 100, the protection element 150 will automatically power off and the charging will stop, and when the battery 100 is about to run out of power, the protection element 150 will shut down and the discharging will end. For another example, when the battery 100 is discharged, the protection element 150 will generally have a maximum limit current (different instruments generally have different requirements), when the discharge exceeds this limit current, the protection element 150 will be automatically shut down, and when the battery 100 is short-circuited due to an accident, the protection element 150 will be automatically disconnected in a very short time so as to no longer energize the battery 100, to prevent the battery 100 from being burned up and bringing safety risk. It should be noted that the over-current protection element 150 can generally be provided at the tab 1111 of a positive electrode.

In the above embodiment, the electrode sheet 160 may also be included, the electrode sheet 160 being provided on a side of the first end 131 of the terminal post 130 away from the first shell 120. Where the electrode sheet 160 is welded, after the terminal post 130 is mounted, to the first end 131 of the terminal post 130, and the provided electrode sheet 160 may, on one hand, play a role in sealing a hole that is provided on the first shell 120 for the terminal post 130 to pass through, and on the other hand, the electrode sheet 160 may increase the electrically conductive contact area to facilitate the use of the battery 100. Specifically, the electrode sheet 160 may generally be selected from a material with good conductivity, such as copper, aluminum, and the like.

As shown in FIGS. 5 to 7, in the above embodiment, an insulating member 170 may also be provided between the terminal post 130 and the first shell 120, and an insulating member 170 may be provided between the electrode sheet 160 and the first shell 120. Where a specific material of the insulating member 170 may be a resin, a plastic, or the like, and the insulating member 170 mainly serves to isolate the first shell 120 from the electrode sheet 160, and to isolate the first shell 120 and the terminal post 130 to prevent electrical contact with each other.

The battery 100 provided by the present invention includes a battery cell assembly 110, a first shell 120, and a terminal post 130 disposed in the first shell 120; the first shell 120 has a holding cavity, and the battery cell assembly 110 is disposed in the holding cavity; the battery cell assembly 110 includes a battery cell 111 and a second shell 112 encapsulated outside the battery cell 111, the battery cell 111 having a tab 1111, and the second shell 112 includes a body 1123 and a sealing edge 1122 extending outwardly from an edge of one side of the body 1123, an opening 1121 is provided on one side of the second shell 112 towards the tab 1111, the sealing edge 1122 bends towards the body 1123; the tab 1111 extends out of the second shell 112 from the opening 1121 along a bending direction of the sealing edge 1122, and the terminal post 130 is electrically connected to the tab 1111. The battery 100 provided in the embodiments of the present invention involves covering a layer of a second shell 112 outside the battery cell 111, and providing the second shell 112 and the battery cell 111 within a first shell 120, where liquid leakage can be effectively prevented at the stress concentration of the edge of the battery cell 111 by the second shell 112, and the battery cell 111 can be prevented from being directly subjected to an external force by the first shell 120, and an opening 1121 can be provided on one side of the second shell 112, and the tab 1111 can be protruded out from the opening 1121 and a sealing edge 1122 is provided on the edge of the opening 1121, and at the same time, the sealing edge 1122 and the tab 1111 are bent together to improve the sealing at the opening 1121.

In addition, the present invention further provides an electronic device, the electronic device includes the battery 100 according to any one of the above embodiments, where the battery 100 includes a battery cell assembly 110, a first shell 120, and a terminal post 130 disposed in the first shell 120; the first shell 120 has a holding cavity, and the battery cell assembly 110 is disposed in the holding cavity; the battery cell assembly 110 includes a battery cell 111 and a second shell 112 encapsulated outside the battery cell 111, the battery cell 111 has a tab 1111, and the second shell 112 includes a body 1123 and a sealing edge 1122 extending outwardly from an edge of one side of the body 1123, an opening 1121 is provided on one side of the second shell 112 towards the tab 1111, the sealing edge 1122 bends towards the body 1123; the tab 1111 extends out of the second shell 112 from the opening 1121 along a bending direction of the sealing edge 1122, and the terminal post 130 is electrically connected to the tab 1111. The battery 100 involves covering a layer of a second shell 112 outside the battery cell 111, and providing the second shell 112 and the battery cell 111 in a first shell 120, and in this way, liquid leakage can be effectively prevented at the stress concentration of the edge of the battery cell 111 by the second shell 112, and the battery cell 111 can be prevented from being directly subjected to an external force by the first shell 120, and an opening 1121 can be provided on one side of the second shell 112, and the tab 1111 can be protruded out from the opening 1121 and a sealing edge 1122 is provided on the edge of the opening 1121, and at the same time, the sealing edge 1122 and the tab 1111 are bent together to improve the sealing at the opening 1121. As the sealing of the battery 100 in the electronic device is improved, the electronic device provided in this embodiment is more competitive in the market.

Finally, it should be noted that the foregoing embodiments are merely intended for describing the technical solutions of the present invention rather than to limit the present invention. Although the present invention is described in detail with reference to the foregoing embodiments, persons of ordinary skill in the art should understand that they may still make modifications to the technical solutions described in the foregoing embodiments or make equivalent substitutions to some or all technical features therein, and these modifications or substitutions do not make the corresponding technical solutions depart from the scope of the technical solutions of the embodiments of the present invention.

## Claims

1. A battery, comprising a battery cell assembly, a first shell, and a terminal post disposed in the first shell, wherein the first shell has a holding cavity, and the battery cell assembly is disposed in the holding cavity;
the battery cell assembly comprises a battery cell and a second shell encapsulated outside the battery cell, the battery cell has a tab, the second shell comprises a body and a sealing edge extending outwardly from an edge of one side of the body, an opening is provided on one side of the second shell towards the tab, the sealing edge bends towards the body; and
the tab extends out of the second shell from the opening along a bending direction of the sealing edge, and the terminal post is electrically connected to the tab.

2. The battery according to claim 1, wherein a projection of the sealing edge in a length direction of the battery overlaps at least partially with a projection of the terminal post in the length direction of the battery.

3. The battery according to claim 2, wherein the sealing edge and the terminal post are disposed side-by-side along the length direction of the battery.

4. The battery according to claim 3, wherein the tab has a connecting portion extends out of an outer side of the sealing edge, the connecting portion is electrically connected to a first end of the terminal post, and a second end of the terminal post extends beyond the first shell.

5. The battery according to claim 4, wherein the opening faces a side of the battery cell and the connecting portion bends and extends on the outer side of the sealing edge.

6. The battery according to claim 5, wherein the connecting portion is bent and provided on a side of the first end of the terminal post away from the second end of the terminal post, and an end surface of the first end of the terminal post abuts against a surface of the connecting portion.

7. The battery according to claim 5, wherein the connecting portion is bent towards the terminal post and the connecting portion extends to a side of the first end of the terminal post, and an end surface of the first end of the terminal post abuts against a surface of the sealing edge.

8. The battery according to claim 7, wherein a surface of the connecting portion abuts against a sidewall of the second end.

9. The battery according to claim 7, wherein a cross-section of the second end is larger than a cross-section of the first end, a connection surface is formed at a connection between the second end and the first end, an end of the connecting portion is bent towards the first end of the terminal post along the connection surface, and an end surface of the connecting portion abuts against the connection surface.

10. The battery according to any one of claims 1-9, wherein a heat dissipation layer is provided between adjacent wall surfaces of the second shell and the first shell.

11. The battery according to any one of claims 1-9, further comprising a protective element, the protective element being connected between the tab and the terminal post.

12. The battery according to any one of claims 1-9, wherein an insulating member is provided between the terminal post and the first shell.

13. The battery according to any one of claims 1-9, wherein the battery cell is a rolled-core or laminated structure.

14. The battery according to any one of claims 1-9, wherein the terminal post is formed by copper or aluminum.

15. The battery according to any one of claims 1-9, wherein the first shell is a metal shell and the second shell is an aluminum-plastic film.

16. The battery according to claim 15, wherein the aluminum-plastic film is formed by bonding nylon, aluminum foil, and polypropylene.

17. The battery according to claim 12, wherein the insulating member is formed by resin or plastic.

18. The battery according to any one of claims 4-9, further comprising an electrode sheet, the electrode sheet being provided on a side of the first end of the terminal post away from the first shell.

19. The battery according to claim 18, wherein the electrode sheet is welded to the first end of the terminal post.

20. An electronic device, comprising the battery according to any one of claims 1-19.
